# EUROPEAN PATENT APPLICATION

(11) **EP 4 793 524 A1**
(43) Date of publication of application: **19.08.2026**
(21) Application number: 23955184.9
(22) Date of filing: 13.10.2023
(51) Int. Cl.: F16H 61/02

(54) **TOUCHSCREEN-BASED GEAR SHIFTING SYSTEM, METHOD AND APPARATUS, COMPUTER DEVICE, AND STORAGE MEDIUM**

(71) Applicant: Ficosa International (Taicang) Company Limited, Suzhou, Jiangsu 215400 (CN)
(72) Inventor: DU, Xuming, Suzhou, Jiangsu 215400 (CN); XU, Kan, Suzhou, Jiangsu 215400 (CN)
(74) Representative: Patentanwälte Olbricht Buchhold Keulertz
(86) International application number: PCT/CN2023/124451
(87) International publication number: WO 2025/076805

(57) **Abstract**

The present disclosure relates to the technical field of automobile control, and particularly to a touchscreen-based gear shifting system, method and device, a computer device, and a storage medium. The system includes a screen assembly module, a control module and a sensor. The screen assembly module is configured to collect and send sliding data to the control module. The sensor is connected to the screen assembly module, and configured to collect and send sensing data to the control module, and the sensing data is corresponding to the sliding data. The control module is configured to receive the sliding data and the sensing data; determine, if it is determined that sliding analysis is required according to the sliding data and the sensing data, a sliding trajectory based on all the received sliding data and all the received sensing data; and determine a target gear based on the sliding trajectory, so as to control shifting a current gear to the target gear. According to the embodiments of the present disclosure, gear shifting operations can be completed without a driver looking at the screen while preventing accidental touches, thereby reducing potential driving hazards.

## Description

### TECHNICAL FIELD

The present disclosure relates to the technical field of automobile control, and particularly, to a touchscreen-based gear shifting system, method and device, a computer device, and a storage medium.

### BACKGROUND

At present, most automobile gear shifting devices are of a push-rod type, a rotary knob type, a push-button type, or the like. All such devices occupy a relatively large space. Moreover, since the gear shifting device is disposed on one side of a cab, a driver may accidentally touch the gear shifting device during driving, which may cause traffic accidents. When a touchscreen tap-based gear shifting method is adopted (specifically, gear indicators are displayed on a screen, and the driver taps one of the gear indicators to shift gears), although the occupied space and the possibility of accidental contact with the gear shifting device are reduced, the risk of inadvertently touching its screen still exists. In addition, tapping the corresponding position usually requires the driver to look at the screen, which poses potential driving hazards.

How to reduce potential driving hazards in the touchscreen-based gear shifting manner is an urgent problem to be solved in the prior art.

### SUMMARY

To address the problems in the prior art, embodiments of the present disclosure provide a touchscreen-based gear shifting system, method and device, a computer device, and a storage medium. A determination as to whether a touch operation is an accidental touch is made jointly by means of a screen assembly module and a sensor. In the case of a non-accidental touch, a target gear is determined based on a collected sliding trajectory input by a user on a screen panel, thereby enabling gear shifting to be completed without requiring the driver to look at the screen while preventing accidental touches, thus reducing potential driving hazards.

To solve the above technical problems, specific technical solutions of the present disclosure are as follows.

In an aspect, an embodiment of the present disclosure provides a touchscreen-based gear shifting system, including a screen assembly module, a control module and a sensor, wherein
the screen assembly module is configured to collect and send sliding data to the control module;
the sensor is connected to the screen assembly module, and configured to collect and send sensing data to the control module, and the sensing data is corresponding to the sliding data; and
the control module is configured to receive the sliding data and the sensing data; determine, if it is determined that sliding analysis is required according to the sliding data and the sensing data, a sliding trajectory based on all the received sliding data and all the received sensing data; and determine a target gear based on the sliding trajectory, so as to control shifting from a current gear to the target gear.

Further, the determining that sliding analysis is required according to the sliding data and the sensing data includes: determining whether the sensing data corresponding to the sliding data indicates a real contact; and if so, determining to perform the sliding analysis.

Further, the sensing data indicates whether a real contact is present, and the determining a sliding trajectory based on all the received sliding data and all the received sensing data includes: determining, if the sensing data corresponding to the sliding data is indicative of a real contact, the sliding data as a target endpoint; and sequentially connecting an initial target endpoint among the target endpoints, all the received sliding data of non-target endpoints, and a final target endpoint among the target endpoints to obtain the sliding trajectory.

Further, the determining the target gear based on the sliding trajectory includes: determining a first gear as the target gear if it is determined that there is no connection between two of the target endpoints.

Further, the determining the target gear based on the sliding trajectory includes: determining, if a plurality of target endpoints are determined to exist, whether the plurality of target endpoints are located on a same horizontal line and connected; and if so, determining a second gear as the target gear.

Further, the determining the target gear based on the sliding trajectory includes: determining, if a plurality of target endpoints are determined to exist, whether the plurality of target endpoints are located on a same horizontal line and the sliding trajectory is connected,; determining, if the target endpoints are determined not to be located on a same horizontal line but the sliding trajectory is connected, whether the final target endpoint is located above the initial target endpoint; and determining, if the final target endpoint is determined to be located above the initial target endpoint, a third gear as the target gear.

Further, the determining the target gear based on the sliding trajectory includes: determining, if a plurality of target endpoints are determined to exist, whether the plurality of target endpoints are located on a same horizontal line and the sliding trajectory is connected; determining, if the target endpoints are determined not to be located on a same horizontal line but the sliding trajectory is connected, whether the final target endpoint is located above the initial target endpoint; and determining, if the final target endpoint is determined not to be located above the initial target endpoint, a fourth gear as the target gear.

Further, the system further includes a vibration module connected to the screen assembly module and the control module, wherein
the control module controls, if determining that the sliding data is a target endpoint, the vibration module to vibrate; and/or
the control module controls, if determining that the sliding data is a target endpoint, the vibration module and the screen assembly module to emit a target prompt tone.

Further, the controlling the vibration module and the screen assembly module to emit a target prompt tone includes:
controlling a frequency of the vibration module to cause the vibration module to emit a preliminary prompt tone; and
controlling a frequency of the screen assembly module to cause resonance between the frequency of the screen assembly module and the frequency of the vibration module, so as to amplify the preliminary prompt tone into the target prompt tone.

In another aspect, an embodiment of the present disclosure further provides a touchscreen-based gear shifting method, including:
receiving sliding data sent by a screen assembly module and sensing data sent by a sensor, and the sensing data is corresponding to the sliding data;
determining, if it is determined that sliding analysis is required according to the sliding data and the sensing data, a sliding trajectory based on all the received sliding data and all the received sensing data; and
determining a target gear based on the sliding trajectory, so as to control shifting from a current gear to the target gear.

Further, the sensing data indicates whether a real contact is present, and the determining the sliding trajectory based on all the received sliding data and all the received sensing data received includes:
determining, if the sensing data corresponding to the sliding data is indicative of a real contact, the sliding data as a target endpoint; and
sequentially connecting an initial target endpoint among the target endpoints, all the received sliding data of non-target endpoints, and a final target endpoint among the target endpoints to obtain the sliding trajectory.

Further, the method further includes:
controlling, if determining that the sliding data is a target endpoint, the vibration module to vibrate; and/or
controlling, if determining that the sliding data is a target endpoint, the vibration module and the screen assembly module to emit a target prompt tone.

In another aspect, an embodiment of the present disclosure further provides a device, including: a screen assembly module, a connecting mechanism, and a base which are connected sequentially from top to bottom, and the connecting mechanism is configured to form a target area between the screen assembly module and the base, and a control module and a sensor are disposed in the target area;
the screen assembly module includes an input panel, and the input panel is configured to receive sliding data input by a user's body part, and send the sliding data to the control module;
the sensor is configured to receive sensing data sent from the input panel by the user's body part, and send the sensing data to the control module, and the sensing data is corresponding to the sliding data; and
the control module is configured to receive the sliding data and the sensing data; determine, if it is determined that sliding analysis is required according to the sliding data and the sensing data, a sliding trajectory based on all the received sliding data and all the received sensing data; and determine a target gear based on the sliding trajectory, so as to control shifting from a current gear to the target gear.

Further, the sensing data indicates whether a real contact is present, and the determining a sliding trajectory based on all the received sliding data and all the received sensing data includes: determining, if the sensing data corresponding to the sliding data is indicative of a real contact, the sliding data as a target endpoint; and sequentially connecting an initial target endpoint among the target endpoints, all the received sliding data of non-target endpoints, and a final target endpoint among the target endpoints to obtain the sliding trajectory.

Further, the device further includes a vibration module located in the target area,
the control module controls, if determining that the sliding data is a target endpoint, the vibration module to vibrate; and/or
the control module controls, if determining that the sliding data is a target endpoint, the vibration module and the screen assembly module to emit a target prompt tone.

Further, the connecting mechanism includes an elastic support member.

In another aspect, an embodiment of the present disclosure further provides a computer device, including a memory, a processor, and a computer program stored on the memory and runnable on the processor, and when executing the computer program, the processor implements the aforementioned method.

In another aspect, an embodiment of the present disclosure further provides a computer-readable storage medium, and the computer-readable storage medium stores a computer program, which when executed by a processor, implements the aforementioned method.

According to the embodiments of the present disclosure, a screen assembly module is used to receive sliding data input by a user and send the sliding data to a control module; a sensor is used to receive and send sensing data to the control module; and the control module is used to receive the sliding data and the sensing data; if it is determined that sliding analysis is required according to the sliding data and the sensing data, a sliding trajectory is determined based on all the received sliding data and all the received sensing data; and a target gear is determined based on the sliding trajectory so as to control shifting from a current gear to the target gear. Thus, whether an accidental touch occurs is determined based on the sliding data collected by the screen assembly module and the sensing data collected by the sensor; if not, the sliding data and the sensing data are continuously received to determine the sliding trajectory, and then the target gear to be shifted to is determined based on the sliding trajectory. Therefore, in a touchscreen-based gear shifting manner, gear shifting operations can be completed without a driver looking at the screen while preventing accidental touches, thereby reducing potential driving hazards.

### BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced as follows. Obviously, the drawings concerned in the following description only illustrate some embodiments of the present disclosure, and those of ordinary skill in the art can obtain other drawings from them without paying any inventive labor.
FIG. 1 illustrates a schematic diagram of a touchscreen-based gear shifting system according to an embodiment of the present disclosure;
FIG. 2 illustrates a schematic diagram of a touchscreen-based gear shifting system according to another embodiment of the present disclosure;
FIG. 3A illustrates a schematic diagram of a sliding trajectory corresponding to a second gear according to an embodiment of the present disclosure;
FIG. 3B illustrates a schematic diagram of a sliding trajectory corresponding to a third gear according to an embodiment of the present disclosure;
FIG. 3C illustrates a schematic diagram of a sliding trajectory corresponding to a fourth gear according to an embodiment of the present disclosure;
FIG. 4 illustrates a flowchart of a touchscreen-based gear shifting method according to an embodiment of the present disclosure;
FIG. 5 illustrates a flowchart of a sliding trajectory determination method according to an embodiment of the present disclosure;
FIG. 6 illustrates a flowchart of a touchscreen-based gear shifting method according to another embodiment of the present disclosure;
FIG. 7A illustrates a perspective structural diagram of a touchscreen-based gear shifting device according to an embodiment of the present disclosure;
FIG. 7B illustrates a dual-plane structural diagram of a touchscreen-based gear shifting device according to an embodiment of the present disclosure;
FIG. 8 illustrates a structural diagram of a touchscreen-based gear shifting device according to another embodiment of the present disclosure;
FIG. 9 illustrates a schematic diagram of a position of a touchscreen-based gear shifting device in an automobile according to an embodiment of the present disclosure;
FIG. 10 illustrates a structural diagram of a computer device according to an embodiment of the present disclosure.

### [Reference numerals]

101: screen assembly module; 102: sensor; 103: control module; 104: vibration module; 3101: first initial target endpoint; 3102: first final target endpoint; 3201: second initial target endpoint; 3202: second final target endpoint; 3301: third initial target endpoint; 3302: third final target endpoint; 701: screen assembly module; 702: connecting mechanism; 703: base; 7011: input panel; 7021: circuit board; 7022: sensor; 8012: input processing module; 7023: cushion pad; 8024: vibration motor; 910: touchscreen-based gear shifting device; 1002: computer device; 1004: processing device; 1006: storage resource; 1008: drive mechanism; 1010: input/output module; 1012: input device; 1014: output device; 1016: presentation device; 1018: graphical user interface; 1020: network interface; 1022: communication link; 1024: communication bus.

### DESCRIPTION OF THE EMBODIMENTS

The technical solutions in the embodiments of the present disclosure will be clearly and completely described below with reference to the drawings for the embodiments of the present disclosure. Obviously, those described are merely some, rather than all, of embodiments of the present disclosure. Based on the embodiments of the present disclosure, any other embodiment obtained by those of ordinary skill in the art without inventive efforts should fall within the protection scope of the present disclosure.

It should be noted that the terms "first", "second" and the like in the description, claims and above drawings of the present disclosure are used to distinguish similar objects and are not necessarily used to describe a specific order or sequence. It should be understood that the data so used may be interchanged under appropriate circumstances, such that the embodiments of the present disclosure described herein can be implemented in orders other than those illustrated or described herein. In addition, the terms "comprise", "include", "have" and any variations thereof are intended to cover non-exclusive inclusions. For example, a process, method, apparatus, product or device that comprises a series of steps or units is not necessarily limited to those steps or units expressly listed, but may include other steps or units not expressly listed or inherent to such process, method, product or device.

It should also be noted that the steps illustrated in the flowcharts in the drawings may be executed in a computer system such as including a set of computer-executable instructions. Although a logical order is illustrated in the flowcharts, in some cases the steps illustrated or described may be executed in an order different from that herein.

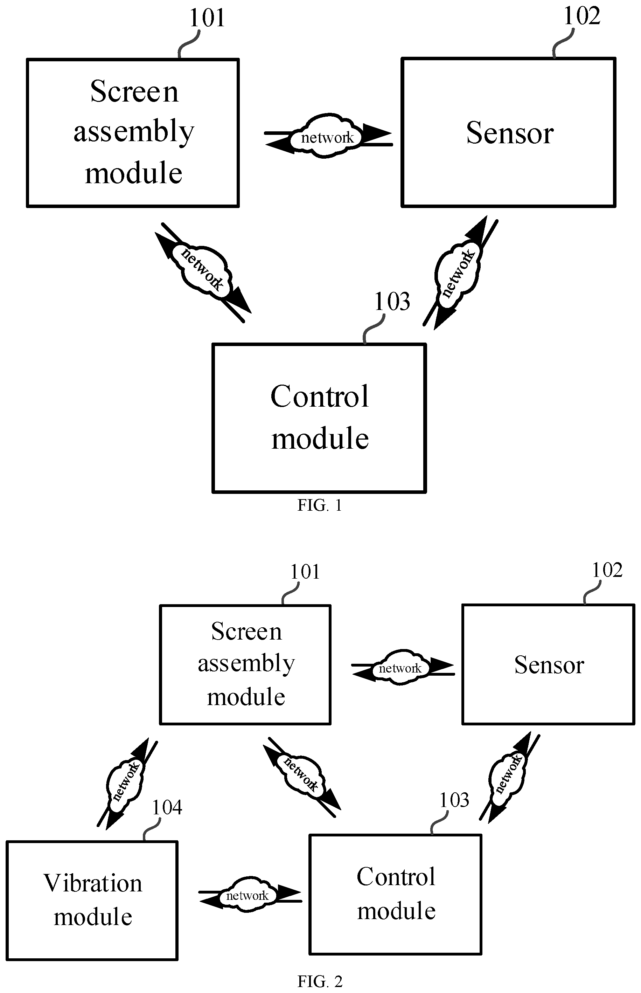

FIG. 1 illustrates a schematic diagram of a touchscreen-based gear shifting system according to an embodiment of the present disclosure, which may include: a screen assembly module 101, a sensor 102, and a control module 103. The screen assembly module 101 and the sensor 102 are in communication with each other and with the control module 103, respectively, via a network, such as a vehicle-mounted communication network. When intending to shift gears, a user may input sliding data through the screen assembly module 101, which collects and sends the sliding data to the control module. The sensor 102 is connected to the screen assembly module 101, and is configured to collect and send sensing data to the control module 103, and the sensing data corresponds to the sliding data. The control module 103 is configured to receive the sliding data and the sensing data, determine, if it is determined that sliding analysis is required according to the sliding data and the sensing data, a sliding trajectory based on all the received sliding data and all the received sensing data; and determine a target gear based on the sliding trajectory, so as to control shifting from a current gear to the target gear. Specifically, the target gear (the gear to which the user intends to shift from the current gear) may be determined based on the sliding trajectory, and then a signal indicative of the target gear or a signal indicative of shifting to the target gear can be sent to control shifting from the current gear to the target gear.

According to an embodiment of the present disclosure, the sliding data may be, for example, data automatically generated when a touch is sensed that characterizes the touch, such as a position identifier indicative of the touch. Meanwhile, the screen assembly module 101 sends the received sliding data to the control module 103. Specifically, when intending to shift gears, a user performs an operation such as touching and sliding on an input panel (e.g., a touchscreen) included in the screen assembly module 101 using a body part (e.g., a hand). Upon sensing a touch on the input panel, the screen assembly module 101 automatically generates sliding data corresponding to the touch. It should be noted that when the user performs a touch on the input panel, the screen assembly module 101 may generate sliding data corresponding to the touch in real time and send the sliding data to the control module 103, so that the control module 103 can immediately obtain a corresponding sliding trajectory when the user finishes sliding on the input panel with the body part. Alternatively, for example, when the user completes a touch on the input panel, the screen assembly module 101 sends all obtained sliding data to the control module 103. The completion of the touch may be determined, for instance, by monitoring a non-first press, a last press among multiple presses, or that no touch is received within a preset duration, which is not limited in the present disclosure.

The sensor 102 may be, for example, any sensor capable of detecting a real touch, such as a pressure sensor. The specific principle is as follows: when sensing a press by a user on the input panel, sensing data corresponding to the press, such as pressure data, is obtained. When the user performs a press, the pressure data collected by the pressure sensor is greater than that collected when the user does not perform a press, so that the pressure data can be used to indicate whether a press is applied. The sensor 102 is connected to the input panel included in the screen assembly module, and collects an operation such as a press performed by the user on the input panel with a body part. Corresponding sensing data is generated based on the operation and sent to the control module 103. It should be noted that when the user presses the input panel, the screen assembly module can sense the touch and generate corresponding sliding data based thereon, and the sensor can simultaneously sense the press and generate sensing data. That is, the sliding data corresponds to the sensing data, and both respectively correspond to the user's operation at the current moment.

Upon receiving the sliding data and the sensing data at the current moment, the control module analyzes the sliding data and the sensing data to determine whether the user's current operation is an accidental touch. If the operation is not an accidental touch, it is determined that sliding analysis is required; otherwise, it is determined that sliding analysis is not required. If it is determined that the sliding analysis is required, the control module continuously receives the sliding data and the sensing data, and determines a sliding trajectory corresponding to the user's operation according to all the received sliding data and all the received sensing data. For example, candidate points corresponding to each contact of the user's body part on the input panel are determined according to all the sliding data and all the sensing data, and all the candidate points are connected to obtain the sliding trajectory. It should be noted that the sliding trajectory may also be determined in other ways, which is not limited in the present disclosure.

A mapping relationship between preset trajectories and gears to be shifted is preconfigured in a database. The determined sliding trajectory is matched with each of the preset trajectories, a target trajectory consistent with the sliding trajectory is determined from the preset trajectories, and a gear to be shifted in the mapping relationship with the target trajectory is set as a target gear. Specifically, the preset trajectory consistent with the sliding trajectory may be, for example, a preset trajectory completely identical to the sliding trajectory, or a preset trajectory with a highest similarity to the sliding trajectory among a plurality of preset trajectories, which is not limited in the present disclosure. In addition, since the mapping relationship only exists between preset trajectories and gears to be shifted and does not involve the current gear, a user only needs to memorize the relationship between one gear (the gear to be shifted) and a preset trajectory, rather than the relationships between two gears (the current gear and the gear to be shifted) and preset trajectory. Thus, the complexity of the mapping relationship between gears and trajectories is low, which greatly reduces the user's memory burden and improves user experience.

The control module is communicatively connected to, for example, a gear shifting mechanism of an automobile. Upon determining the target gear, the control module sends an instruction of shifting the current gear to the target gear to the gear shifting mechanism, so that the gear shifting mechanism performs gear shifting. The gear shifting mechanism may be any mechanism capable of implementing a gear shifting operation, which is not limited in the present disclosure.

According to another embodiment of the present disclosure, the sensing data indicates whether a real contact is present. The determining that sliding analysis is required according to the sliding data and the sensing data may include: determining whether the sensing data corresponding to the sliding data indicates a real contact; and if so, determining to perform the sliding analysis.

Specifically, when the sensing data is pressure data, the sensing data is determined to be indicative of a real contact if it is greater than or equal to a preset pressure threshold; otherwise, the sensing data is determined to be indicative of a non-real contact. Upon receiving the sliding data and the sensing data at the current moment, it is determined whether the sensing data is greater than or equal to the preset pressure threshold; if so, the sensing data is determined to be indicative of a real contact, and sliding analysis is then continued; otherwise, no sliding analysis is performed. Thus, upon sensing a touch on the input panel, a pressure detection is performed simultaneously. When both a touch and a pressure exist, a real contact is confirmed, and a gear shifting analysis process is initiated. Therefore, based on comprehensive consideration of both touch and pressure, potential hazards caused by accidental touches (e.g., touches by water droplets or foreign objects) are greatly avoided. Meanwhile, initiating the gear shifting analysis process based on such a real contact also prevents an inaccurate starting point of the determined sliding trajectory, thereby further improving the accuracy of gear shifting.

According to another embodiment of the present disclosure, the determining a sliding trajectory based on all the received sliding data and all the received sensing data includes: determining, if the sensing data corresponding to the sliding data is indicative of a real contact, the sliding data as a target endpoint; and sequentially connecting an initial target endpoint among the target endpoints, all the received sliding data of non-target endpoints, and a final target endpoint among the target endpoints to obtain the sliding trajectory.

Specifically, when starting to draw a trajectory on the input panel, the user presses the input panel and then draws the trajectory thereon, and presses the input panel again upon completion of drawing. It should be noted that other pressing points may also be defined during the trajectory drawing process in addition to the two presses mentioned above. Thus, when it is determined that the sensing data corresponding to the sliding data is indicative of a real contact, the sliding data is determined as a target endpoint, so that all the received sliding data is classified into target endpoints and non-target endpoints. An initial target endpoint corresponding to the earliest moment and a final target endpoint corresponding to the latest moment are determined from a plurality of target endpoints. Furthermore, the initial target endpoint, the non-target endpoints, and the final target endpoint are sequentially connected. It should be noted that the target endpoints other than the initial target endpoint and the final target endpoint may be treated as the non-target endpoints. Specifically, the sequential connection may be performed according to a moment sequence or based on the positions of the sliding data, which is not limited in the present disclosure.

To further improve the accuracy of the sliding trajectory, the present disclosure further provides a vibration module configured to provide input feedback to a user, and the input feedback also further avoids accidental touches. Specifically, FIG. 2 illustrates a schematic diagram of a touchscreen-based gear shifting system according to another embodiment of the present disclosure. The system includes a vibration module 104 which is communicatively connected to the screen assembly module 101 and the control module 103 (e.g., via a bus). The control module 103 controls the vibration module 104 to vibrate if determining that the sliding data is a target endpoint; and/or, the control module 103 controls the vibration module 104 and the screen assembly module 101 to emit a target prompt tone if determining that the sliding data is a target endpoint. The prompt tone may be, for example, a vibration sound or another sound, which is not limited in the present disclosure. Thus, when the input panel is pressed, vibration and/or prompt tone feedback is provided. In the case of an accidental touch, the user stops touching or pressing the input panel or removes an object from the input panel, and when intending to shift gears, the user continues to draw the trajectory. Accordingly, accidental touches are further avoided and the accuracy of the sliding trajectory is improved. To be noted, different vibration may be achieved corresponding to different pressing levels, which is not limited in the present disclosure.

According to another embodiment of the present disclosure, the controlling the vibration module and the screen assembly module to emit a target prompt tone includes: controlling a frequency of the vibration module to cause the vibration module to emit a preliminary prompt tone; and controlling a frequency of the screen assembly module to cause resonance between the frequency of the screen assembly module and the frequency of the vibration module, so as to amplify the preliminary prompt tone into the target prompt tone.

Sound is emitted through the frequency control of the vibration module, and the emitted preliminary prompt tone is amplified into the target prompt tone by using the vibration module and the screen assembly module as a sound-emitting cavity. Accordingly, sound amplification is realized based on the resonance principle without a loudspeaker, thus reducing the resource waste.

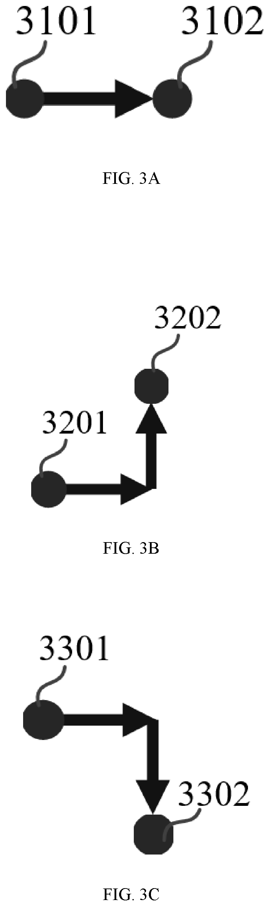

FIG. 3A illustrates a schematic diagram of a sliding trajectory corresponding to a second gear according to an embodiment of the present disclosure; FIG. 3B illustrates a schematic diagram of a sliding trajectory corresponding to a third gear according to an embodiment of the present disclosure; and FIG. 3C illustrates a schematic diagram of a sliding trajectory corresponding to a fourth gear according to an embodiment of the present disclosure.

According to another embodiment of the present disclosure, the determining a target gear based on the sliding trajectory includes: determining a first gear as the target gear when it is determined that there is no connection between two of the target endpoints.

Specifically, if a double tap is determined, the gear is shifted from the current gear to a parking gear (P gear). For example, the shifting from the current gear to the parking gear may be implemented by sending a parking gear signal or a signal indicative of shifting to the parking gear. When two target endpoints (presses) are detected and there is no connection therebetween, a double tap is determined, thereby determining the first gear (parking gear) as the target gear. It should be noted that no connection means that there is at least one discontinuity point. In addition, a double tap may also be determined in other ways, which is not limited in the present disclosure.

According to another embodiment of the present disclosure, the determining a target gear based on the sliding trajectory includes: determining, if a plurality of target endpoints are determined to exist, whether the plurality of target endpoints are located on a same horizontal line and connected; and if so, determining a second gear as the target gear.

Specifically, when the sliding trajectory is determined to be a horizontal line, as illustrated in FIG. 3A, the gear is shifted from the current gear to a neutral gear (N gear). For example, the shifting from the current gear to the neutral gear may be implemented by sending a neutral gear signal or a signal indicative of shifting to the neutral gear. It is determined whether the plurality of target endpoints are located on a same horizontal line and connected, if at least two target endpoints are determined to exist, and if so, the second gear (neutral gear) is determined as the target gear. Specifically, the ideal sliding trajectory is illustrated in FIG. 3A. The control module detects a first initial target endpoint 3101 based on the sliding data and the sensing data, continuously receives the sliding data and the sensing data (indicative of a non-real touch) to draw an intermediate trajectory between the first initial target endpoint 3101 and a first final target endpoint 3102, and finally draws the first final target endpoint 3102 based on the sliding data and the sensing data (indicative of a non-real touch) received. It should be noted that the length of the intermediate trajectory may be set according to actual conditions, or may be not set.

According to another embodiment of the present disclosure, the determining a target gear based on the sliding trajectory includes: determining, if a plurality of target endpoints are determined to exist, whether the plurality of target endpoints are located on a same horizontal line and the sliding trajectory is connected; determining, if the target endpoints are determined not to be located on a same horizontal line but the sliding trajectory is connected, whether the final target endpoint is located above the initial target endpoint; and determining, if the final target endpoint is determined to be located above the initial target endpoint, a third gear as the target gear.

Specifically, when the sliding trajectory is determined to be a horizontal line and a vertical line extending upward from a tail end of the horizontal line, as illustrated in FIG. 3B, the gear is shifted from the current gear to a reverse gear (R gear). For example, the shifting from the current gear to the reverse gear may be implemented by sending a reverse gear signal or a signal indicative of shifting to the reverse gear. It is determined whether the plurality of target endpoints are located on a same horizontal line and the sliding trajectory is connected, if at least two target endpoints are determined to exist; it is determined whether the final target endpoint is located above the initial target endpoint, if the plurality of target endpoints are not located on a same horizontal line but the sliding trajectory is connected; and the third gear (reverse gear) is determined as the target gear if the final target endpoint is located above the initial target endpoint. Specifically, the ideal sliding trajectory is illustrated in FIG. 3B. The control module detects a second initial target endpoint 3201 based on the sliding data and the sensing data, continuously receives the sliding data and the sensing data (indicative of a non-real touch) to draw an intermediate trajectory between the second initial target endpoint 3201 and a second final target endpoint 3202, and finally draws the second final target endpoint 3202 based on the sliding data and the sensing data (indicative of a real touch) received. It should be noted that the length of the intermediate trajectory may be set according to actual conditions, or may be not set. To avoid confusion with FIG. 3A, no pressing operation is provided at a turning point, thereby improving the accuracy of the sliding trajectory.

According to another embodiment of the present disclosure, the determining a target gear based on the sliding trajectory includes: determining, if a plurality of target endpoints are determined to exist, whether the plurality of target endpoints are located on a same horizontal line and the sliding trajectory is connected; determining, if the target endpoints are determined not to be located on a same horizontal line but the sliding trajectory is connected, whether the final target endpoint is located above the initial target endpoint; and determining, if the final target endpoint is determined not to be located above the initial target endpoint, a fourth gear as the target gear.

Specifically, if the sliding trajectory is determined to be a horizontal line and a vertical line extending downward from a tail end of the horizontal line, as illustrated in FIG. 3C, the gear is shifted from the current gear to a drive gear (D gear). For example, the shifting from the current gear to the drive gear may be implemented by sending a drive gear signal or a signal indicative of shifting to the drive gear. It is determined whether the plurality of target endpoints are located on a same horizontal line and the sliding trajectory is connected, if at least two target endpoints are determined to exist; it is determined whether the final target endpoint is located above the initial target endpoint, if the target endpoints are determined not to be located on a same horizontal line but the sliding trajectory is connected; and the fourth gear (drive gear) is determined as the target gear, if the final target endpoint is determined not to be located above the initial target endpoint (i.e., below the initial target endpoint since they are not on a same horizontal line). Specifically, the ideal sliding trajectory is illustrated in FIG. 3C. The control module detects a third initial target endpoint 3301 based on the sliding data and the sensing data, continuously receives the sliding data and the sensing data (indicative of a non-real touch) to draw an intermediate trajectory between the third initial target endpoint 3301 and a third final target endpoint 3302, and finally draws the third final target endpoint 3302 based on the sliding data and the sensing data (indicative of a real touch) received. It should be noted that the length of the intermediate trajectory may be set according to actual conditions, or may not be set. To avoid confusion with FIG. 3A, no pressing operation is provided at a turning point, thereby improving the accuracy of the sliding trajectory.

It should be noted that a double tap corresponds to the parking gear as the target gear, the sliding trajectory in FIG. 3A corresponds to the neutral gear, the sliding trajectory in FIG. 3B corresponds to the reverse gear, and the sliding trajectory in FIG. 3C corresponds to the drive gear. Such a correspondence between sliding trajectories and gears conforms to ergonomics and has minimal difference from operation habits of other gear shifting modes, thereby reducing a user's memory burden and improving user experience. In addition, FIGS. 3A, 3B and 3C each illustrate a sliding trajectory in an ideal state. In an actual process of determining the target gear, it may be determined that the trajectory is similar to the corresponding sliding trajectory by means of a threshold or the like. For example, with respect to FIG. 3B, after it is determined that the plurality of target endpoints are not on a same horizontal line but the sliding trajectory is connected, when a longitudinal distance between the second final target endpoint 3202 and the second initial target endpoint 3201 is greater than or equal to a preset longitudinal threshold, the target gear corresponding to the sliding trajectory is determined to be the reverse gear.

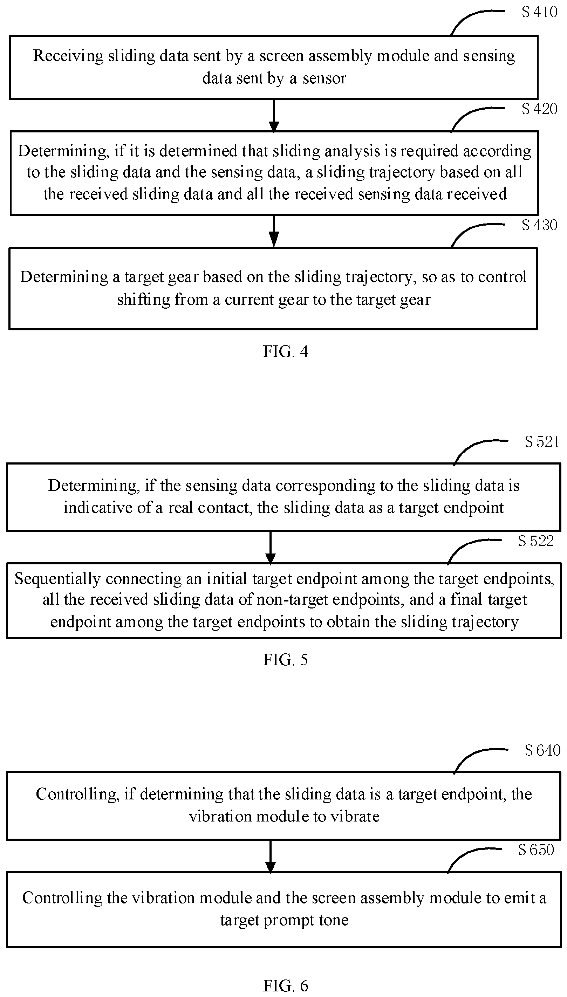

FIG. 4 illustrates a flowchart of a touchscreen-based gear shifting method according to an embodiment of the present disclosure. Although the process of touchscreen-based gear shifting is illustrated in FIG. 4, more or fewer operation steps may be included based on conventional or non-creative labor. The order of steps recited in the embodiment is merely one of various execution orders, and does not represent the sole execution order. When an actual system or device product is in operation, execution may be performed either in the order of the method illustrated in the embodiment or the drawing, or in parallel. Specifically, as illustrated in FIG. 4, the method may include:
S410: receiving sliding data sent by a screen assembly module and sensing data sent by a sensor;
S420: determining, if it is determined that sliding analysis is required according to the sliding data and the sensing data, a sliding trajectory based on all the received sliding data and all the received sensing data received; and
S430: determining a target gear based on the sliding trajectory, so as to control shifting from a current gear to the target gear.

According to another embodiment of the present disclosure, the sensing data corresponds to the sliding data. Specifically, the execution of S410 to S430 is similar to the operation performed by the control module 103 in FIG. 1, which will not be repeated here.

FIG. 5 illustrates a flowchart of a sliding trajectory determination method according to an embodiment of the present disclosure. Although the process of determining a sliding trajectory is illustrated in FIG. 5, more or fewer operation steps may be included based on conventional or non-creative labor. The order of steps recited in the embodiment is merely one of various execution orders and does not represent the sole execution order. When an actual system or device product is in operation, execution may be performed either in the order of the method illustrated in the embodiment or the drawing, or in parallel. Specifically, as illustrated in FIG. 5, the method may include:
S521: determining, if the sensing data corresponding to the sliding data is indicative of a real contact, the sliding data as a target endpoint; and
S522: sequentially connecting an initial target endpoint among the target endpoints, all the received sliding data of non-target endpoints, and a final target endpoint among the target endpoints to obtain the sliding trajectory.

According to another embodiment of the present disclosure, the sensing data indicates whether a real touch is present, and for example may be pressure data. Specifically, the execution of S521 to S522 is similar to the operation of determining the sliding trajectory performed by the control module 103 in FIG. 1, which will not be repeated here.

FIG. 6 illustrates a flowchart of a touchscreen-based gear shifting method according to another embodiment of the present disclosure. Although another process of touchscreen-based gear shifting is illustrated in FIG. 6, more or fewer operation steps may be included based on conventional or non-creative labor. The order of steps recited in the embodiment is merely one of various execution orders and does not represent the sole execution order. When an actual system or device product is in operation, execution may be performed either in the order of the method illustrated in the embodiment or the drawing, or in parallel. Specifically, as illustrated in FIG. 6, the method may include:
S640: controlling, if determining that the sliding data is a target endpoint, the vibration module to vibrate;
S650: controlling the vibration module and the screen assembly module to emit a target prompt tone.

According to another embodiment of the present disclosure, the execution of S640 to S650 is similar to the operation of generating vibration and emitting a target prompt tone performed by the control module 103 in FIG. 1, which will not be repeated here. It should be noted that, in practice, if the sliding data is determined to be target endpoints, only the vibration module may be controlled to vibrate, or only the vibration module and the screen assembly module may be controlled to emit a target prompt tone, or both vibration generation and target prompt tone emission may be controlled simultaneously.

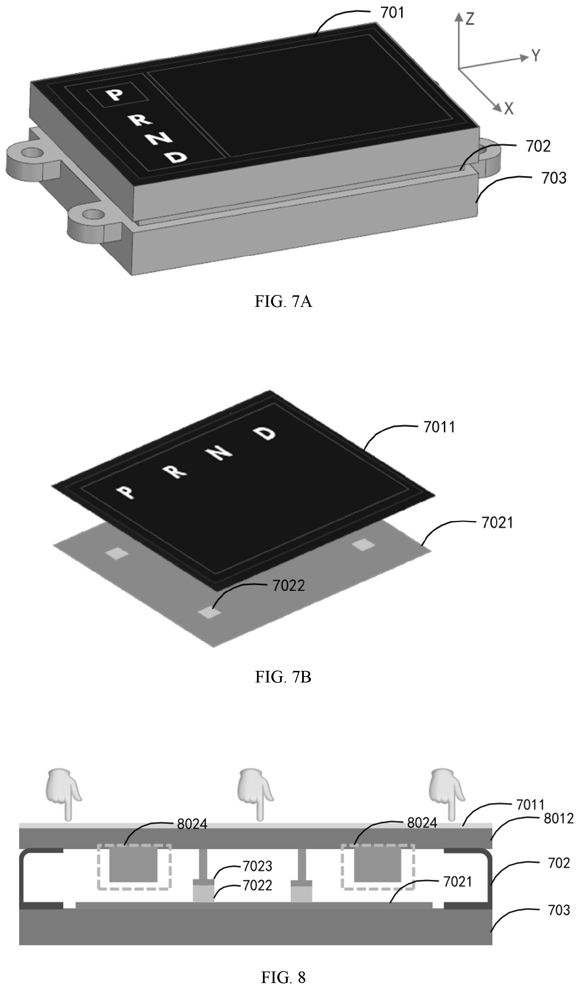

FIG. 7A illustrates a perspective structural diagram of a touchscreen-based gear shifting device according to an embodiment of the present disclosure; and FIG. 7B illustrates a dual-plane structural diagram of a touchscreen-based gear shifting device according to an embodiment of the present disclosure.

According to another embodiment of the present disclosure, the touchscreen-based gear shifting device includes a screen assembly module 701, a connecting mechanism 702, and a base 703 which are connected sequentially from top to bottom, and the connecting mechanism 702 is configured to form a target area between the screen assembly module 701 and the base 703, and a control module and a sensor are disposed in the target area;
the screen assembly module 701 includes an input panel, and the input panel is configured to receive sliding data input by a user's body part, and send the sliding data to the control module;
the sensor is configured to receive sensing data sent from the input panel by the user's body part, and send the sensing data to the control module, and the sensing data corresponds to the sliding data; and
the control module is configured to receive the sliding data and the sensing data; determine, if it is determined that sliding analysis is required according to the sliding data and the sensing data, a sliding trajectory based on all the received sliding data and all the received sensing data received; and determine a target gear based on the sliding trajectory, so as to control shifting from a current gear to the target gear. Specifically, for example, the control module may determine the target gear (a gear to which the user intends to shift from the current gear) based on the sliding trajectory, and then send a signal indicative of shifting to the target gear to control shifting from the current gear to the target gear.

A three-dimensional structure of the touchscreen-based gear shifting device formed by connecting the screen assembly module 701, the connecting mechanism 702 and the base 703 is illustrated in FIG. 7A. It should be noted that the display content on an upper input panel of the screen assembly module 701 may be as illustrated in FIG. 7A, that is, gear indicators on a left side and an input area for a user to draw a trajectory on a right side. The display content of the input panel may also be different from this layout; for example, the gear indicators may be arranged on an upper side and the input area may be arranged on a lower side, and the specific layout is not limited in the present disclosure.

The input area included in the screen assembly module 701 is configured to receive a trajectory drawn by a user, convert the trajectory into sliding data, and send the sliding data to the control module in the target area. The sensor in the target area is configured to sense a pressing operation of the user in the input area, and determine and send sensing data to the control module.

The sensing data (e.g., pressure data) indicates whether a real touch is present. The determine a sliding trajectory based on all the received sliding data and all the received sensing data received includes: determining, if the sensing data corresponding to the sliding data is indicative of a real contact, the sliding data as a target endpoint; and sequentially connecting an initial target endpoint among the target endpoints, all the received sliding data of non-target endpoints, and a final target endpoint among the target endpoints, so as to obtain the sliding trajectory. Specific operations of the control module for determining the sliding trajectory and the target gear may be similar to those performed by the control module in FIG. 1, which will not be repeated here.

To illustrate the touchscreen-based gear shifting device more clearly, the present disclosure provides a dual-plane structural diagram in FIG. 7B. Specifically, the screen assembly module 701 includes an upper input panel 7011, the display content of which may be as illustrated in the figure, or any other layout may be adopted, which is not limited in the present disclosure. The input panel 7011 may be a touch-enabled screen or a separate touch pad. The target area includes a control module and a sensor 7022. Specifically, the target area may include a circuit board 7021, the control module (not illustrated in FIG. 7B) and the sensor 7022. It should be noted that the number and positions of the sensors 7022 may be configured according to actual conditions, which are not limited in the present disclosure. For example, four sensors 7022 may be provided at four corners of the circuit board 7021, respectively. Specifically, the control module may be any module capable of realizing the above functions, and for example, implemented by a programmable chip.

FIG. 8 illustrates a structural diagram of a touchscreen-based gear shifting device according to another embodiment of the present disclosure.

According to another embodiment of the present disclosure, the touchscreen-based gear shifting device further includes a vibration module disposed in the target area. The control module controls the vibration module to vibrate if the sliding data is determined to be a target endpoint, and/or the control module controls the vibration module and the screen assembly module to emit a target prompt tone if the sliding data is determined to be a target endpoint.

Specifically, the vibration module may be any vibration device with an adjustable frequency, such as a vibration motor 8024. The control module may control the frequency of the vibration motor 8024 to control the vibration motor 8024 to vibrate and/or emit a target prompt tone. The vibration motor 8024 may be, for example, a linear vibration motor or a voice coil motor. The vibration motor 8024 and the screen assembly module 701 together form a sound system, so as to emit a target prompt tone without an additional speaker. For the specific operation of emitting the target prompt tone, reference may be made to the operation of the control module in FIG. 2, which will not be repeated here.

The screen assembly module 701 includes an input panel 7011 and an input processing module 8012. The input processing module 8012 may be, for example, configured to process a touch sensed from the input panel 7011 to obtain the sliding data. For a specific implementation, reference may be made to the prior art, which will not be described in detail herein in the present disclosure.

The connecting mechanism 702 between the screen assembly module 701 and the base 703 may be as illustrated in FIG. 8, and may be, for example, any mechanism capable of realizing a connecting function. A target area is formed between the screen assembly module 701 and the base 703 via the connecting mechanism 702, and the target area includes the circuit board 7021, the vibration motor 8024, the sensor 7022, the control module (not illustrated in FIG. 8), and a cushion pad 7023. It should be noted that the cushion pad 7023 may be disposed separately from the sensor 7022, integrally formed therewith, or omitted (not illustrated in FIG. 8), which is not limited in the present disclosure. The sensor 7022 is a pressure sensor configured to sense pressure input from the input panel 7011. It should be noted that FIG. 8 is only an exemplary illustration of components and does not limit the size, number and position of each component, or the proportion among components.

According to another embodiment of the present disclosure, the connecting mechanism includes an elastic support member, such as an elastic bracket. Thereby, the screen assembly module 701 can float to further amplify the target prompt tone. It should be noted that the target prompt tone may be a medium for prompting a user, such as vibration or reminder voice, which is not limited in the present disclosure.

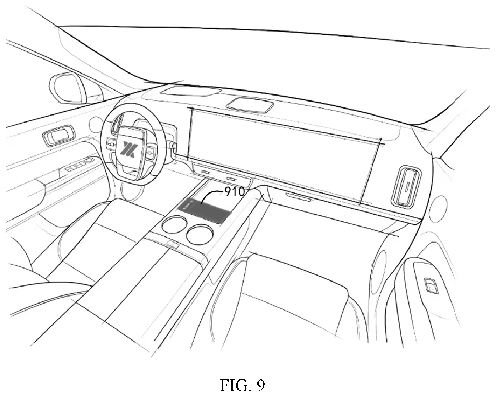

FIG. 9 illustrates a schematic diagram of a position of a touchscreen-based gear shifting device in an automobile according to an embodiment of the present disclosure.

According to another embodiment of the present disclosure, the touchscreen-based gear shifting device 901 may be, for example, disposed at a position where an original gear shifting device of the automobile is mounted as illustrated in FIG. 9, and may also be disposed at any other position, which is not limited in the present disclosure.

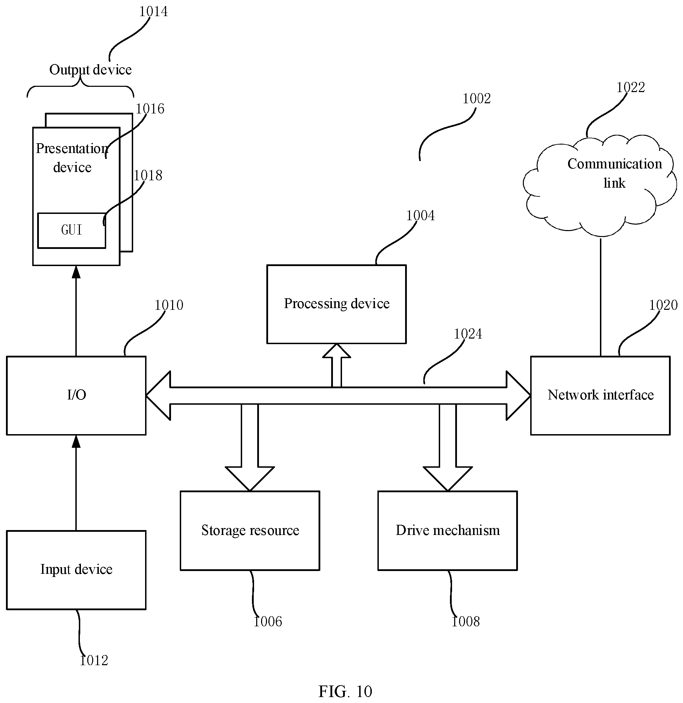

FIG. 10 illustrates a structural diagram of a computer device according to an embodiment of the present disclosure. The device in the present disclosure may be the computer device in this embodiment, which performs the method of the present disclosure. The computer device 1002 may include one or more processing devices 1004, such as one or more central processing units (CPUs), each of which may implement one or more hardware threads. The computer device 1002 may further include any storage resource 1006 configured to store any kind of information such as codes, settings, data, or the like. By way of non-limiting example, the storage resource 1006 may include any one or combinations of any type of RAM, any type of ROM, EEPROM, Flash memory, and the like. More generally, any storage resource may store information using any technology. Further, any storage resource may provide volatile or nonvolatile retention of information. Further, any storage resource may represent a fixed or removable component of the computer device 1002. In one case, when the processing device 1004 executes associated instructions stored in any storage resource or combination of storage resources, the computer device 1002 can perform any operation of the associated instructions. The computer device 1002 further includes one or more drive mechanisms 1008 configured to interact with any storage resource, such as a hard disk drive mechanism, an optical disc drive mechanism, and the like. It should be noted that the drive mechanism 1008 may be, for example, a drive circuit for a vibration motor and a corresponding mechanical drive device for driving the vibration motor, which is not limited in the present disclosure. Further, the drive mechanism 1008 is communicatively coupled to a communication bus 1024.

The computer device 1002 may further include an input/output (I/O) module 1010 configured to receive various inputs (via an input device 1012) and to provide various outputs (via an output device 1014). It should be noted that the input/output module 1010 includes, but is not limited to, a data processing unit and an associated drive circuit. A specific output mechanism may include a presentation device 1016 and an associated graphical user interface (GUI) 1018. In other embodiments, the input/output (I/O) module 1010, the input device 1012, and the output device 1014 may be omitted, and the computer device 1002 may only serve as a computer device in a network. The computer device 1002 may further include one or more network interfaces 1020 configured to exchange data with other devices via one or more communication links 1022. One or more communication buses 1124 couple the components described above together. It should be noted that the internal communication schemes of the communication bus 1024 include, but are not limited to, the I/O and the communication bus networks such as Serial Peripheral Interface (SPI), Inter-Integrated Circuit (I2C), Local Interconnect Network (LIN), Universal Asynchronous Receiver/Transmitter (UART), and the like.

The communication link 1022 may be implemented in any manner, such as Controller Area Network (CAN), LIN, Pulse Width Modulation (PWM), etc., or any combination thereof. It should be noted that the communication link 1022 and the network interface 1020 include, but are not limited to, implementations based on a drive circuit. The communication link 1022 may include any combination of a hard-wired link, a wireless link, etc. governed by any protocol or combination of protocols.

An embodiment of the present disclosure further provides a computer-readable storage medium, and the computer-readable storage medium stores a computer program which, when executed by a processor, implements the aforementioned method.

An embodiment of the present disclosure further provides a computer program product, including a computer program which, when executed by a processor, implements the aforementioned method.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, optical storage, etc.) containing therein computer usable program codes.

The present disclosure is described with reference to a flowchart and/or a block diagram of the method, device (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, such that the instructions stored in the computer readable memory can produce manufacture articles including an instructing device which realizes the function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

The specific embodiments above have further described in detail the objectives, the technical solutions and the advantageous effects of the present disclosure. It should be understood that the foregoing are merely specific embodiments of the present disclosure and are not intended to limit the protection scope of the present disclosure. Any modification, equivalent substitution, improvement, etc. made within the spirit and principles of the present disclosure should fall within the protection scope of the present disclosure.

## Claims

1. A touchscreen-based gear shifting system, comprising a screen assembly module, a control module and a sensor, wherein
the screen assembly module is configured to collect and send sliding data to the control module;
the sensor is connected to the screen assembly module, and configured to collect and send sensing data to the control module, wherein the sensing data is corresponding to the sliding data; and
the control module is configured to receive the sliding data and the sensing data; determine, if it is determined that sliding analysis is required according to the sliding data and the sensing data, a sliding trajectory based on all the received sliding data and all the received sensing data; and determine a target gear based on the sliding trajectory, so as to control shifting from a current gear to the target gear.

2. The system according to claim 1, wherein the determining that sliding analysis is required according to the sliding data and the sensing data comprises: determining whether the sensing data corresponding to the sliding data indicates a real contact; and if so, determining to perform the sliding analysis.

3. The system according to claim 1, wherein the sensing data indicates whether a real contact is present, and the determining a sliding trajectory based on all the received sliding data and all the received sensing data comprises: determining, if the sensing data corresponding to the sliding data is indicative of a real contact, the sliding data as a target endpoint; and sequentially connecting an initial target endpoint among the target endpoints, all the received sliding data of non-target endpoints, and a final target endpoint among the target endpoints to obtain the sliding trajectory.

4. The system according to claim 3, wherein the determining the target gear based on the sliding trajectory comprises: determining a first gear as the target gear if it is determined that there is no connection between two of the target endpoints.

5. The system according to claim 3, wherein the determining the target gear based on the sliding trajectory comprises: determining, if a plurality of target endpoints are determined to exist, whether the plurality of target endpoints are located on a same horizontal line and connected; and if so, determining a second gear as the target gear.

6. The system according to claim 3, wherein the determining the target gear based on the sliding trajectory comprises: determining, if a plurality of target endpoints are determined to exist, whether the plurality of target endpoints are located on a same horizontal line and the sliding trajectory is connected,; determining, if the target endpoints are determined not to be located on a same horizontal line but the sliding trajectory is connected, whether the final target endpoint is located above the initial target endpoint; and determining, if the final target endpoint is determined to be located above the initial target endpoint, a third gear as the target gear.

7. The system according to claim 3, wherein the determining the target gear based on the sliding trajectory comprises: determining, if a plurality of target endpoints are determined to exist, whether the plurality of target endpoints are located on a same horizontal line and the sliding trajectory is connected; determining, if the target endpoints are determined not to be located on a same horizontal line but the sliding trajectory is connected, whether the final target endpoint is located above the initial target endpoint; and determining, if the final target endpoint is determined not to be located above the initial target endpoint, a fourth gear as the target gear.

8. The system according to claim 1, further comprising a vibration module connected to the screen assembly module and the control module, wherein
the control module controls, if determining that the sliding data is a target endpoint, the vibration module to vibrate; and/or
the control module controls, if determining that the sliding data is a target endpoint, the vibration module and the screen assembly module to emit a target prompt tone.

9. The system according to claim 8, wherein the controlling the vibration module and the screen assembly module to emit a target prompt tone comprises:
controlling a frequency of the vibration module to cause the vibration module to emit a preliminary prompt tone; and
controlling a frequency of the screen assembly module to cause resonance between the frequency of the screen assembly module and the frequency of the vibration module, so as to amplify the preliminary prompt tone into the target prompt tone.

10. A touchscreen-based gear shifting method, comprising:
receiving sliding data sent by a screen assembly module and sensing data sent by a sensor, wherein the sensing data is corresponding to the sliding data;
determining, if it is determined that sliding analysis is required according to the sliding data and the sensing data, a sliding trajectory based on all the received sliding data and all the received sensing data; and
determining a target gear based on the sliding trajectory, so as to control shifting from a current gear to the target gear.

11. The method according to claim 10, wherein the sensing data indicates whether a real contact is present, and the determining the sliding trajectory based on all the received sliding data and all the received sensing data comprises:
determining, if the sensing data corresponding to the sliding data is indicative of a real contact, the sliding data as a target endpoint; and
sequentially connecting an initial target endpoint among the target endpoints, all the received sliding data of non-target endpoints, and a final target endpoint among the target endpoints to obtain the sliding trajectory.

12. The method according to claim 10, further comprising:
controlling, if determining that the sliding data is a target endpoint, the vibration module to vibrate; and/or
controlling, if determining that the sliding data is a target endpoint, the vibration module and the screen assembly module to emit a target prompt tone.

13. A touchscreen-based gear shifting device, comprising: a screen assembly module, a connecting mechanism, and a base which are connected sequentially from top to bottom, wherein the connecting mechanism is configured to form a target area between the screen assembly module and the base, and a control module and a sensor are disposed in the target area;
the screen assembly module comprises an input panel, wherein the input panel is configured to receive sliding data input by a user's body part, and send the sliding data to the control module;
the sensor is configured to receive sensing data sent from the input panel by the user's body part, and send the sensing data to the control module, wherein the sensing data is corresponding to the sliding data; and
the control module is configured to receive the sliding data and the sensing data; determine, if it is determined that sliding analysis is required according to the sliding data and the sensing data, a sliding trajectory based on all the received sliding data and all the received sensing data; and determine a target gear based on the sliding trajectory, so as to control shifting from a current gear to the target gear.

14. The device according to claim 13, wherein the sensing data indicates whether a real contact is present, and the determining a sliding trajectory based on all the received sliding data and all the received sensing data comprises: determining, if the sensing data corresponding to the sliding data is indicative of a real contact, the sliding data as a target endpoint; and sequentially connecting an initial target endpoint among the target endpoints, all the received sliding data of non-target endpoints, and a final target endpoint among the target endpoints to obtain the sliding trajectory.

15. The device according to claim 13, further comprising a vibration module located in the target area,
the control module controls, if determining that the sliding data is a target endpoint, the vibration module to vibrate; and/or
the control module controls, if determining that the sliding data is a target endpoint, the vibration module and the screen assembly module to emit a target prompt tone.

16. The device according to claim 13, wherein the connecting mechanism comprises an elastic support member.

17. A computer device, comprising a memory, a processor, and a computer program stored on the memory and runnable on the processor, wherein when executing the computer program, the processor implements the touchscreen-based gear shifting method according to any one of claims 10 to 12.

18. A computer-readable storage medium, wherein the computer-readable storage medium stores a computer program, which when executed by a processor, implements the touchscreen-based gear shifting method according to any one of claims 10 to 12.
